# EUROPÄISCHE PATENTSCHRIFT

(11) **EP 3 078 276 B1**
(45) Veröffentlichungstag und Bekanntmachung des Hinweises auf die Patenterteilung: **19.12.2018**
(21) Anmeldenummer: 15157263.3
(22) Anmeldetag: 02.03.2015
(51) Int. Cl.: A23L 3/40, A23G 9/52, A23C 1/01, A23C 1/08, A23C 9/152, A23C 9/16, A23G 9/32, A23G 9/34, A23G 9/40

(54) **Pulverförmige Nahrungsmittelzusammensetzung**
Food composition in powder form
Composition alimentaire en poudre

(43) Veröffentlichungstag der Anmeldung: 12.10.2016
(73) Patentinhaber: DMK Deutsches Milchkontor GmbH, 27404 Zeven (DE)
(72) Erfinder: Diekhaus, Martin, 49451 Holdorf (DE); Drunat, Carolin, 48153 Münster (DE)
(74) Vertreter: Fabry, Bernd

(56) Entgegenhaltungen:
- EP-A2- 0 113 898
- DE-A1- 1 692 368
- GB-A- 854 315
- US-A- 4 871 573
- US-A1- 2003 113 425
- US-B1- 6 541 056

## Beschreibung

### GEBIET DER ERFINDUNG

Die Erfindung befindet sich auf dem Gebiet Milchprodukte und betrifft eine pulverförmige Nahrungsmittelzusammensetzung, insbesondere ein Instantpulver zur Herstellung von Speiseeis, ein Verfahren zu dessen Herstellung sowie dessen Verwendung.

### STAND DER TECHNIK

Zu den Trends im Bereich der so genannten "convenient food" Artikel gehört es, Nahrungsmittel nicht mehr im Fachgeschäft zu kaufen, sondern selbst herzustellen. Der besondere Vorteil besteht darin, diese Produkte jederzeit verfügbar zu haben, was in der heutigen Zeit vor allem von jungen Menschen mit wenig Zeit besonders geschätzt wird. Einher geht dieses Bedürfnis aber mit der Anforderung, dass die Herstellung der entsprechenden Produkte einfach und wenig zeitintensiv sein soll und die Ergebnisse trotzdem dem entsprechen müssen, wie man sie beim Kauf im Fachhandel voraussetzt. Es versteht sich, dass diese zum Teil entgegenlaufenden Anforderungen die Hersteller entsprechender Produkte vor ernsthafte Schwierigkeiten stellen.

Ein typisches Beispiel ist die Herstellung von Speiseeis: mitten im Winter, wenn der italienische Eisverkäufer seinen wohlverdienten Urlaub in der Heimat macht und der Supermarkt am Wochenende geschlossen hat, wünscht man sich nichts mehr als beispielsweise ein frisches Stracciatella-Eis. Diesem Bedürfnis nachzukommen setzt voraus, dass genügend Eier, Zucker und Sahne im Hause sind. Ist dies der Fall, muss zunächst im Wasserbad eine Zuckereimischung hergestellt werden, die dann mit der geschlagenen Sahne und frisch geraspelter Schokolade, frischem Vanillemark und vielleicht einem Schuss Amaretto versetzt werden, ehe die Masse homogenisiert, abgekühlt und dann in eine Eismaschine gegeben wird. Die Zubereitungszeit liegt auch bei einem versierten Hobbykoch bei mindestens einer halben Stunde - für die heutige Zeit viel zu lange, wo doch alles auf Knopfdruck und direkt erfolgen soll. Wie viel praktischer ist es doch, eine Vorratspackung zu öffnen, das magische Stracciatella-Eispulver in Wasser aufzulösen und die Masse direkt in die Eismaschine zu geben oder auch nur mit dem Mixer aufzuschlagen.

Doch die Enttäuschung bei den Produkten des Stands der Technik ist in aller Regel groß: die Pulver wollen sich gar nicht auflösen, sondern klumpen und müssen unter voller Leistung des Mixers über Minuten in Lösung gebracht werden. Die resultierende Zubereitung macht einen wenig appetitlichen Anblick, weil die Schokoladensplitter nicht nur angebrannt aussehen, sondern auch so schmecken. Hat man die Vorratspackung schon vor ein paar Wochen gekauft, liegt gar kein Pulver mehr vor, sondern infolge der hohes hygroskopischen Wirkung hat sich ein fester Block gebildet, den man erst einmal zertrümmern muss. Hat man nach all diesen Unbillen endlich sein Eis in der Schale, stellt man fest, dass das Aroma auf dem Herstellungsweg verloren gegangen sein muss, denn das Produkt schmeckt sandig, fad und verdient eigentlich nur entsorgt zu werden.

Maßgeblich für dieses schlechte Ergebnis ist weniger die Zusammensetzung der Produkte als der Weg auf dem die Herstellung der konfektionierten Pulver erfolgt. Insbesondere die Art der Entwässerung erweist sich nicht nur als entscheidend für Sensorik und optisches Erscheinungsbild, sondern auch für Löslichkeit und Lagerstabilität. Dabei gilt es insbesondere die bekannten Sprühtrocknungsverfahren, wie beispielsweise im Zusammenhang mit der Herstellung von Speiseeispulvern in der CN 101164426 A (SHENZHEN) beschreiben, zu vermeiden.

Das Dokument DE 1 692 368 A1 betrifft ein Verfahren zur Herstellung von im Wesentlichen trocknen, rehydratisierbaren Eis/Milchprodukten, bei dem man eine verhältnismäßig dünne Schicht eines flüssigen oder halbfesten aber nicht hartgefrorenen Eis/Milchproduktes bei verringertem Druck behandelt, um dessen Dicke durch Aufschäumen zu vergrößern, und wobei man die aufgeschäumte Schicht unter verringertem Druck erwärmt, um diese auf einen Feuchtigkeitsgehalt von weniger als 4% zu trocknen. Die Eis/Milchmischungen sind unter anderen Eiscrememischungen, Eis/Milchmischgetränke, Speiseeis, Sahneeis, Kunstspeiseeis und ähnliche bekannte Speiseeismischungen. Beispiel 2 offenbart ein pulverförmiges Eiscremegemisch, welches einer kontinuierlichen Trocknung in einer Vakuumtrocknungsanlage unterzogen wurde.

Das Dokument GB 854 315 A betrifft ein Verfahren zur Herstellung eines getrockneten, fetthaltigen Milchproduktes. Dabei wird Vollmilch bei 72 °C für 16 Sekunden pasteurisiert. Nach einem Abkühlung-Schritt, wurde die Vollmilch unter Vakuum bei einer Temperatur nicht höher als 57 °C auf einen Feststoffgehalt von 45-50 Gew.-% konzentriert. Das erhaltene Konzentrat wurde dann einer Homogenisierung bei 57 °C und einem Druck von 276-345 bar unterworfen. Das homogenisierte Produkt wurde bei einer Temperatur von 12 °C abgekühlt und in einem Vakuumbandtrockner bei einer Temperatur nicht höher als 65 °C getrocknet.

Das Dokument EP 0 113 898 A2 betrifft ein instantisiertes, enzymatisch hydrolisiertes Molke-Pulver. Dabei wird zuerst Süßmolke enzymatisch hydrolisiert und auf einen Feststoffgehalt von 65% konzentriert. Anschließend wurde das erhaltene Molkekonzentrat auf einem Vakuum-Band-Trockner getrocknet.

Das Dokument US 6,541,056 B1 betrifft das Herstellungsverfahren eines Malz-Getränkepulvers. Dabei wird eine erste Komponente(die sogenannte *liquid beverage ingredients),* die unter anderem Pflanzfett enthalten kann, mit einer zweiten Komponente (die sogenannte *dry malted beverage ingredient*), die unter anderem Milchpulver und Eiweißpulver enthalten kann, gemischt. Die erhaltene Mischung wird danach in einem Vakuumbandtrockner bei 120-160 °C und einem Druck vorzugsweise von 20-50 mbar getrocknet. Das erhaltene Zwischenprodukt wird danach mit einer *liquid beverage ingredients* nochmals gemischt und getrocknet.

Das Dokument US,4,871,573 A betrifft ein Verfahren zur Herstellung eines Milchpulvers, das, bezogen auf das Gewicht der Trockenmaterialen, 20 bis 30 % Fette enthält und worin die Lactose im Wesentlichen in kristallisierter Form vorliegt. Das Verfahren ist dadurch gekennzeichnet, dass man Vollmilch oder Magermilch bei 60 bis 150 °C während einiger Sekunden bis zu 30 Minuten pasteurisiert, dass man die thermisch behandelte Milch bis auf 30 bis 60 Gew.-% Trockenmaterial konzentriert und dass man das Konzentrat auf eine Temperatur unter 40 °C abkühlt, dass man das abgekühlte Konzentrat mit Lactosekristallen mit Abmessungen von kleiner als oder gleich 2 µm beimpft, dass man die Kristallisation der Lactose in Form feiner Kristalle unter langsamen und dauerndem Rühren während 30 Minuten bis 30 Stunden bewirkt, dass man die erhaltene Suspension auf 0 bis 20 °C abkühlt, und dass man das Konzentrat mittels Sprühtrocknung trocknet.

Das Dokument US 2003/0113425 A1 offenbart ein Verfahren zur Herstellung eines fetthaltigen Milchpulvers, wobei das Verfahren umfasst: Herstellen einer standardisierten Milch, Einspeisen der hergestellten standardisierten Milch in einen Verdampfer mit wenigstens einer Stufe, um ein Vorkonzentrat zu erhalten, Homogenisieren des Vorkonzentrats, weiteres Eindampfen des Vorkonzentrats in einem Verdampfer mit wenigstens einer Stufe, um ein Konzentrat mit einem Gesamtfeststoffgehalt von wenigstens 50 Gew.-% zu erhalten, und dann Sprühtrocknen des Konzentrats.

An dieser Stelle setzt nun die vorliegende Erfindung ein: Die Aufgabe hat nämlich darin bestanden, pulverförmige Zubereitungen speziell zur Herstellung von Speiseeis zur Verfügung zu stellen, welche sich gleichzeitig durch eine hervorragende Löslichkeit und Lagerstabilität auszeichnen, hohe Aromaqualität und Farbbeständigkeit besitzen und dazu nicht hygroskopisch sind.

### BESCHREIBUNG DER ERFINDUNG

Ein erster Gegenstand der Erfindung betrifft eine pulverförmige Nahrungsmittelzusammensetzung, insbesondere ein leicht lösliches Pulver zur Herstellung von Speiseeis, das dadurch erhältlich ist, dass man eine Zubereitung enthaltend oder bestehend aus
(i) 25 bis 60 Gew.-% Kohlenhydraten, die ausgewählt sind aus der Gruppe, die gebildet wird von Glucose, Fructose, Dextrose, Dextrinen und deren Gemischen,
(ii) 5 bis 30 Gew.-% gehärtete oder teilgehärtete oder ungehärtete Pflanzenfette,
(iii) 25 bis 50 Gew.-% Milchprodukten,
(iv) 0,1 bis 10 Gew.-% Emulgatoren ausgewählt aus der Gruppe bestehend aus Vollei, Mono- und Diglyceriden von Speisefettsäuren und Eigelb sowie gegebenenfalls
(v) 1 bis 10 Gew.-% Zusatzstoffen ausgewählt aus der Gruppe, die gebildet wird von
   - Süßstoffen ausgewählt aus der Gruppe bestehend aus Zuckeralkohole, Miraculin, Monellin, Thaumatin, Curculin, Brazzein, Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin, Süß schmeckende Aminosäuren, Hernandulcin, Dihydrochalconglykoside, Glycyrrhizin, Glycerrhetinsäure, ihre Derivate und Salze, Extrakte von Lakritz, Lippia dulcis Extrakte, Momordica ssp. Extrakte, Momordica grosvenori [Luo Han Guo] und die daraus gewonnenen Mogroside, Hydrangea dulcis oder Stevia ssp. (z.B. Stevia rebaudiana) Extrakte,
   - Säureregulatoren,
   - Verdickungsmitteln ausgewählt aus der Gruppe bestehend aus, Alginsäure, Natriumalginat, Kaliumalginat, Ammoniumalginat, Calciumalginat, Propylenglycolalginat, Agar Agar, Carrgeen, Furcelleran, Johannisbrotkernmehl, Guarkernmehl, Traganth, Gummi arabicum, Xanthan, Karaya, Tarakernmehl, Gellan, Pektin, Opekta, Amidiertes Pektin, Mikrokristalline Cellulose, Cellulosepulver, Methylcellulose, Ethylcellulose, Hydroxypropylcellulose, Methylethylcellulose, Carboxymethylcellulose und Natriumcarboxymethylcellulose,
   - Vitaminen,
   - prebiotischen Stoffen,
   - Antioxidantien,
   - Fruchtzubereitungen,
   - Nüssen,
   - Schokoladen,
   - Aromastoffen und
   - Lebensmittelfarbstoffen
      sowie deren Gemischen,
mit der Maßgabe, dass sich die Mengenangaben gegebenenfalls mit Wasser zu 100 Gew.-% ergänzen,
(a) zunächst einer Temperaturbehandlung unterwirft,
(b) das temperaturbehandelte Produkt homogenisiert,
(c) das homogenisierte Produkt aufkonzentriert
(d) das aufkonzentrierte Produkt zur Kristallisation bringt, und
(e) das kristallisierte Produkt auf einem Vakuumbandtrockner von restlichem Wasser befreit.

Ein weiterer Gegenstand der Erfindung betrifft ein analoges Verfahren zur Herstellung einer pulverförmigen Nahrungsmittelzusammensetzung, bei dem man eine Zubereitung enthaltend oder bestehend aus
(i) 25 bis 60 Gew.-% Kohlenhydraten, die ausgewählt sind aus der Gruppe, die gebildet wird von Glucose, Fructose, Dextrose, Dextrinen und deren Gemischen,
(ii) 5 bis 30 Gew.-% gehärtete oder teilgehärtete oder ungehärtete Pflanzenfette,
(iii) 25 bis 50 Milchprodukten,
(iv) 0,1 bis 10 Gew.-% Emulgatoren, die ausgewählt sind aus der Gruppe, die gebildet wird von Vollei, Mono- und Diglyceride von Speisefettsäuren und Eigelb sowie gegebenenfalls
(v) 1 bis 10 Gew.-% Zusatzstoffen ausgewählt aus der Gruppe, die gebildet wird von
   - Süßstoffen ausgewählt aus der Gruppe bestehend aus Zuckeralkohole, Miraculin, Monellin, Thaumatin, Curculin, Brazzein, Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin, Süß schmeckende Aminosäuren, Hernandulcin, Dihydrochalconglykoside, Glycyrrhizin, Glycerrhetinsäure, ihre Derivate und Salze, Extrakte von Lakritz, Lippia dulcis Extrakte, Momordica ssp. Extrakte, Momordica grosvenori [Luo Han Guo] und die daraus gewonnenen Mogroside, Hydrangea dulcis oder Stevia ssp. (z.B. Stevia rebaudiana) Extrakte,
   - Säureregulatoren,
   - Verdickungsmitteln, ausgewählt aus der Gruppe bestehend aus, Alginsäure, Natriumalginat, Kaliumalginat, Ammoniumalginat, Calciumalginat, Propylenglycolalginat, Agar Agar, Carrgeen, Furcelleran, Johannisbrotkernmehl, Guarkernmehl, Traganth, Gummi arabicum, Xanthan, Karaya, Tarakernmehl, Gellan, Pektin, Opekta, Amidiertes Pektin, Mikrokristalline Cellulose, Cellulosepulver, Methylcellulose, Ethylcellulose, Hydroxypropylcellulose, Methylethylcellulose, Carboxymethylcellulose und Natriumcarboxymethylcellulose,
   - Vitaminen,
   - prebiotischen Stoffen,
   - Antioxidantien,
   - Fruchtzubereitungen,
   - Nüssen,
   - Schokoladen,
   - Aromastoffen und
   - Lebensmittelfarbstoffen
      sowie deren Gemischen,
mit der Maßgabe, dass sich die Mengenangaben gegebenenfalls mit Wasser zu 100 Gew.-% ergänzen,
(a) zunächst einer Temperaturbehandlung unterwirft,
(b) das temperaturbehandelte Produkt bei Temperaturen im Bereich von 30 bis 80 °C und einem Druck von 50 bis 150 bar homogenisiert,
(c) das homogenisierte Produkt aufkonzentriert
(d) das aufkonzentrierte Produkt zur Kristallisation bringt, und
(e) und das kristallisierte Produkt auf einem Vakuumbandtrockner von restlichem Wasser befreit.

Überraschenderweise wurde gefunden, dass die erfindungsgemäßen Zubereitungen die eingangs geschilderte komplexe Aufgabe voll umfänglich lösen. Die Produkte sind spontan in Wasser löslich ohne an der Luft Wasser anzuziehen und dabei aufzuquellen. Dank des schonenden Herstellverfahrens kommt es weder zu einer Beeinträchtigung der Aromaqualität noch zu Verfärbungen. Diese vorteilhaften Eigenschaften weisen die Produkte auch dann noch auf, wenn sie über Wochen gelagert werden.

### AUSGANGSZUBEREITUNGEN

Die Ausgangszubereitungen enthalten als obligatorische Bestandteile Kohlenhydrate, gehärtete oder teilgehärtete oder ungehärtete Pflanzenfette, Milchprodukte, (Lebensmittel-) Emulgatoren und Zusatzstoffe.

### Kohlenhydrate

. Erfindungsgemäß werden hier Kohlenhydrate eingesetzt, die ausgewählt sind aus der Gruppe, die gebildet wird von Glucose, Fructose, Dextrose, Dextrinen und deren Gemischen. Bei Dextrinen bzw. Maltodextrinen handelt es sich um Stärkeabbauprodukte, die von ihrer Molekülgröße her zwischen Oligosacchariden und Stärke liegen. Üblicherweise kommen sie in Form von weißem bzw. hellgelbem Pulver vor. Sie werden hauptsächlich aus Weizen-, Kartoffel-, Tapioka- und Maisstärke durch trockene Erhitzung (>150 °C) oder unter Säureeinwirkung gewonnen. In der Natur wird Dextrin zum Beispiel von *Bacterium macerans* erzeugt. Dextrine entstehen auch durch den enzymatischen Abbau von Stärke durch Amylase können. Bevorzugt sind Dextrine mit 5 bis 20 und insbesondere 6 bis 10 Dextrose-Äquivalenten (DE-Einheiten).

### Pflanzenfette

Besonders bevorzugt sind Palmfett, Kokosfett oder deren Mischungen, die durch Härtung der entsprechenden Öle erhalten werden.

### Milchprodukte

Milchprodukte, die die Gruppe (iii) bilden, umfassen Magermilch, Vollmilch, teilentrahmte Milch, Sahne, Molke, Molkeproteinkonzentrate und deren Gemischen. Die Produkte können auch in trockener Form, also speziell als sprühgetrocknete Pulver eingesetzt werden. In diesem Fall müssen die Ausgangszubereitungen jedoch mit Wasser vermischt werden, so dass ein pumpbarer Slurry entsteht, den man weiterverarbeiten kann.

### Emulgatoren

Emulgatoren, die die Gruppe (iv) bilden, zeichnen sich durch die wichtige Eigenschaft aus, sowohl in Wasser als auch in Fett löslich zu sein. Emulgatoren bestehen meist aus einem fettlöslichen und einem wasserlöslichen Teil. Sie kommen immer dann zum Einsatz, wenn Wasser und Öl zu einer beständigen, homogenen Vermischung gebracht werden sollen. Erfindungsgemäß werden Vollei, Eigelb und Mono- und Diglyceride von Speisefettsäuren eingesetzt.

### WEITERE HILFS- UND ZUSATZSTOFFE

### Süßstoffe

Erfindungsgemäß sind die Süßstoffe ausgewählt aus der Gruppe bestehend aus Zuckeralkohole, Miraculin, Monellin, Thaumatin, Curculin, Brazzein, Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin, Süß schmeckende Aminosäuren, Hernandulcin, Dihydrochalconglykoside, Glycyrrhizin, Glycerrhetinsäure, ihre Derivate und Salze, Extrakte von Lakritz, Lippia dulcis Extrakte, Momordica ssp. Extrakte, Momordica grosvenori [Luo Han Guo] und die daraus gewonnenen Mogroside, Hydrangea dulcis oder Stevia ssp. (z.B. Stevia rebaudiana) Extrakte.

### Säureregulatoren

Die Nahrungsmittelpulver können Carbonsäuren enthalten. Säuren im Sinne der Erfindung sind bevorzugt in Lebensmitteln zulässige Säuren, insbesondere die hier genannten:
E 260 - Essigsäure
E 270 - Milchsäure
E 290 - Kohlendioxid
E 296 - Apfelsäure
E 297 - Fumarsäure
E 330 - Citronensäure
E 331 - Natriumcitrat
E 332 - Kaliumcitrat
E 333 - Calciumcitrat
E 334 - Weinsäure
E 335 - Natriumtartrat
E 336 - Kaliumtartrat
E 337 - Natrium-Kaliumtartrat
E 338 - Phosphorsäure
E 353 - Metaweinsäure
E 354 - Calciumtartrat
E 355 - Adipinsäure
E 363 - Bernsteinsäure
E 380 - Triammoniumcitrat
E 513 - Schwefelsäure
E 574 - Gluconsäure
E 575 - Glucono-delta-Lacton

### Verdickungsmittel

Verdickungsmittel sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Erfindungsgemäß sind die Verdickungsmittel ausgewählt aus der Gruppe bestehend aus, Alginsäure, Natriumalginat, Kaliumalginat, Ammoniumalginat, Calciumalginat, Propylenglycolalginat, Agar Agar, Carrgeen, Furcelleran, Johannisbrotkernmehl, Guarkernmehl, Traganth, Gummi arabicum, Xanthan, Karaya, Tarakernmehl, Gellan, Pektin, Opekta, Amidiertes Pektin, Mikrokristalline Cellulose, Cellulosepulver, Methylcellulose, Ethylcellulose, Hydroxypropylcellulose, Methylethylcellulose, Carboxymethylcellulose und Natriumcarboxymethylcellulose.

### Aromastoffe

Die Erfindung erlaubt insbesondere auch den Einsatz von Aromastoffen mit Ester-, Aldehyd- oder Lactonstruktur, die in Gegenwart von Titandioxid und unter Lichteinfluss besonders schnell abgebaut werden. Die Erfindung sorgt somit auch für eine verbesserte Stabilität, speziell Lagerstabilität der Aromastoffe.

Die erfindungsgemäßen Nahrungsmittelpulver können einen oder mehrere Aromastoffe enthalten. Typische Beispiele umfassen: Acetophenon, Allylcapronat, alpha-lonon, beta-lonon, Anisaldehyd, Anisylacetat, Anisylformiat, Benzaldehyd, Benzothiazol, Benzylacetat, Benzylalkohol, Benzylbenzoat, beta-lonon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-l-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-lsobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

### Vitamine

In einer weiteren Ausführungsform der vorliegenden Erfindung können die Nahrungsmittelzusatzstoffe als weitere fakultative Gruppe von Zusatzstoffen Vitamine enthalten. Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und unter bestimmten Umständen auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllolchinon, Menachinon).

Die bevorzugten Vitamine sind neben der Ascorbinsäure die Gruppe der Tocopherole.

### Prebiotische Stoffe

In einer weiteren Ausgestaltung der Erfindung können die Zubereitungen des Weiteren Prebiotische Stoffe ("Prebiotics") enthalten. Prebiotics werden als unverdauliche Nahrungsbestandteile definiert, deren Verabreichung das Wachstum oder die Aktivität einer Reihe nützlicher Bakterien im Dickdarm stimuliert.

**Fructooligosaccharide.** Fructooligosaccharide oder abgekürzt FOS umfassen insbesondere kurzkettige Vertreter mit 3 bis 5 Kohlenstoffatomen, wie beispielsweise D-Fructose und D-Glucose. FOS, auch als Neozucker bezeichnet, werden kommerziell auf Basis von Saccharose und dem aus Pilzen gewonnenen Enzym Fructosyltransferase hergestellt. FOS unterstützen insbesondere das Wachstum von Bifidobakterien im Darm und werden vor allem in den USA zusammen mit probiotischen Bakterien in verschiedenen funktionalisierten Lebensmitteln vermarktet.

**Inuline.** Inuline zählen zu einer Gruppe von natürlich vorkommenden Fructose enthaltenden Oligosachhariden. Sie gehören zu einer Klasse von Kohlenhydraten, die als Fructane bezeichnet werden. Ihre Gewinnung erfolgt aus den Wurzeln der Chicoree-Pflanze (Cichorium intybus) oder so genannten Jerusalem-Artischocken. Inuline bestehen überwiegend aus Fructoseeinheiten und weisen typisch eine Glucoseeinheit als Endgruppe auf. Die Fructoseeinheiten sind dabei miteinander über eine beta-(2-1)glykosidische Bindung verknüpft. Der mittlere Polymerisationsgrad von Inulinen, die als Prebiotics im nahrungsmittelbereich Anwendung finden, liegt bei 10 bis 12. Inuline stimulieren ebenfalls das Wachstum von Bifidobakterien im Dickdarm.

**Isomaltooligosaccharide.** Bei dieser Gruppe handelt es sich um eine Mischung von alpha-D-verknüpften Glucoseoligomeren, einschließlich Isomaltose, Panose, isomaltotetraose, Isomaltopentaose, Nigerose, Kojibiose, Isopanose und höherer verzweigter Oligosaccharide. Isomaltooligosaccharide werden über verschiedene enzymatische Wege hergestellt. Sie stimulieren ebenfalls das Wachstum von Bifidobakterien und Lactobacillen im Dickdarm. Isomaltooligosaccharide werden speziell in Japan als Nahrungsmittelzusatzstoffe in funktionalisierten Lebensmitteln eingesetzt. Inzwischen finden sie auch in den USA Verbreitung.

**Lactilol.** Lactilol ist das Disaccharid der Lactulose. Seine medizinische Anwendung findet gegen Verstopfung und bei häpatischer Enzephalopathie. In Japan wird Lactilol als prebiotic eingesetzt. Es widersteht dem Abbau im oberen Verdauungstrakt, wird aber durch verschiedene Darmbakterien fermentiert, was zu einem Anstieg der Biomasse an Bifidobakterien und Lactobacillen im Darm führt. Lactilol ist auch unter der chemischen Bezeichnung 4-0-(beta-D-galactopyranosyl)-D-glucitol bekannt. Der medizinsche Anwendungsbereich von Lactilol in den USA ist wegen fehlender Studien beschränkt; in Europa wird es vorzugsweise als Süßstoff eingesetzt.

**Lactosucrose.** Lactosucrose ist ein Trisaccharid, das sich aus D-Galactose, D-Glucose und D-Fructose aufbaut. Lactosucrose wird durch enzymatischen Transfer des Galactosylrestes in der Lactose auf die Sucrose hergestellt. Es wird weder im Magen noch im oberen Teil des Darmtraktes abgebaut und wird ausschließlich von Bifidobakterien zu Wachstum konsumiert. Unter physiologischen Gesichtspunkten wirkt Lactosucrose als Stimulator für das Wachstum der Darmflora. Lactosucrose ist ebenfalls bekannt als 4G-beta-D-galactosucrose. Es ist in Japan als Nahrungsmittelzusatzstoff und als Bestandteil von funktionalisierten lebensmittel weit verbreitet, insbesondere auch als Zusatzstoff für Joghurts. Lactosucrose wird derzeit auch in den USA für einen ähnlichen Anwendungszweck getestet.

**Lactulose.** Lactulose ist ein halbsynthetisches Disaccharid aus D-Lactose und D-Fructose. Die Zucker sind über eine beta-glykosidische Bindung verknüpft, was sie resistent gegen Hydrolyse durch Verdauungsenzyme macht. Stattdessen wird Lactulose durch eine beschränkte Anzahl von Darmbakterien fermentiert, was zu einem Wachstum insbesondere von Lactobacillen und Bifidobakterien führt. Lactulose stellt in den USA ein verschreibungspflichtiges Medikament gegen Verstopfung und hepatische Enzephalopathie dar. In Japan hingegen wird es als Nahrungsmittelzusatzstoff und Bestandteil von funktionalisierten Lebensmitteln frei verkauft.

**Pyrodextrine.** Pyrodextrine umfassen eine Mischung von glucoseenthaltenden Oligosacchariden, die bei der Hydrolyse von Stärke gebildet werden. Pyrodextrine fördern die Proliferation von Bifidobakterien im Dickdarm. Auch sie werden im oberen Darmbereich nicht abgebaut.

**Sojaoligosaccharide.** Bei dieser Gruppe handelt es sich um Oligosaccharide, die im Wesentlichen nur in Sojabohnen und darüber noch in anderen Bohnen sowie Erbsen zu finden sind. Die beiden maßgeblichen Vertreter sind das Trisaccharid Raffinose und das Tetrasaccharid Stachyose. Raffinose setzt sich aus jeweils einem Molekül D-Galactose, D-Glucose und D-Fructose zusammen. Stachyose besteht aus zwei Molekülen D-Galactose sowie jeweils einem Molekül D-Glucose und D-Fructose. Sojaoligosacccharide stimulieren das Wachstum von Bifidobakterien im Dickdarm und werden in Japan bereits als Nahrungsmittelzusatzstoffe sowie in funktionalisierten Lebensmitteln eingesetzt. In den USA werden sie für diese Anwendung derzeit getestet.

**Transgalactooligosaccharide.** Transgalactooligosaccharide (TOS) stellen Mischungen von Oligosacchariden auf Basis D-Glucose und D-Galactose dar. TOS werden ausgehend von D-Lactose mit Hilfe des Enzyms Betaglucosidase aus Aspergillus oryzae hergestellt. Wie viele andere Prebiotics sind auch TOS im Dünndarm stabil und stimulieren das Wachstum von Bifidobakterien im Dickdarm. TOS werden sowohl bereits in Europa als auch in Japan als Nahrungsmittelzusatzstoffe vermarktet.

**Xylooligosaccharide.** Xylooligosaccharide enthalten beta-1,4-verknüpfte Xyloseeinheiten. Der Polymerisationsgrad der Xylooligosaccharide liegt zwischen 2 und 4. Sie werden durch enzymatische Hydrolyse des Polysaccharids Xylan erhalten. Sie werden bereits in Japan als Nahrungsmittelzusatzstoffe vermarktet, in den USA befinden sie sich noch in der Testphase.

**Biopolymere.** Geeignete Biopolymere, die ebenfalls als Prebiotics in Betracht kommen, wie beispielsweise Beta-Glucane, zeichnen sich dadurch aus, dass sie auf pflanzlicher Basis hergestellt werden, beispielsweise kommen als Rohstoffquellen Cerealien wie Hafer und Gerste, aber auch Pilze, Hefen und Bakterien in Frage. Außerdem geeignet sind mikrobiell hergestellte Zellwandsuspensionen oder ganze Zellen mit hohem Beta-Glucan Gehalt. Restliche Anteile an Monomeren weisen 1-3 und 1-4 oder 1-3 und 1-6 Verknüpfungen auf, wobei der Gehalt stark variieren kann. Vorzugsweise werden Beta-Glucane auf Basis von Hefen, insbesondere Saccharomyces, speziell Saccharomyces cerevisiae, erhalten. Andere geeignete Biopolymere sind Chitin und Chitinderivate, insbesondere Oligoglucosamin und Chitosan, das ein typisches Hydrokolloid darstellt.

**Galactooligosaccharide (GOS).** Galacto-Oligosaccharide werden durch die enzymatische Umwandlung von Lactose, einer Komponente von Rindermilch, erzeugt. GOS umfassen im Allgemeinen eine Kette von Galactose-Einheiten, die durch aufeinanderfolgende Transgalactosylierung-Reaktionen gebildet werden, und die eine terminale Glucoseeinheit aufweisen. Terminale Glucoseeinheiten werden zumeist durch eine frühzeitige Hydrolyse von GOS gebildet. Der Polymerisationsgrad der GOS kann ziemlich stark schwanken und reicht von 2 bis 8 Monomereinheiten. Eine Reihe von Faktoren bestimmt dabei den Aufbau und die Reihenfolge Monomereinheiten: die Enzym-Quelle, das Ausgangsmaterial (Lactose-Konzentration und Ursprung der Lactose), die am Prozess beteiligten Enzyme, Bedingungen bei der Verarbeitung und die Zusammensetzung des Mediums.

### Antioxidantien

In der Lebensmittelindustrie werden sowohl natürliche als auch künstliche Antioxidationsmittel verwendet. Natürliche und künstliche Antioxidantien unterscheiden sich in erster Linie dadurch, dass erstere natürlich in der Nahrung vorkommen und letztere künstlich hergestellt werden. So werden natürliche Antioxidationsmittel, so sie als Lebensmittelzusatzstoff eingesetzt werden sollen, beispielsweise aus Pflanzenölen gewonnen. Vitamin E - auch als Tocopherol bekannt - wird beispielsweise häufig aus Sojaöl hergestellt. Synthetische Antioxidantien wie das Propylgallat, das Octylgallat und das Dodecylgallat werden dagegen durch chemische Synthese gewonnen. Die Gallate können bei empfindlichen Personen Allergien auslösen. Weitere einsetzbare Antioxidantien in Zusammensetzungen der vorliegenden Erfindung sind: Schwefeldioxid, E 220 Sulfite Natriumsulfit, E 221 Natriumhydrogensulfit, E 222 Natriumdisulfit, E 223 Kaliumdisulfit, E 224 Kalziumsulfit, E 226 Kalziumhydrogensulfit, E 227 Kaliumhydrogensulfit, E 228 Milchsäure, E 270 Ascorbinsäure, E 300 Natrium-L-Ascorbat, E 301 Calcium-L-Ascorbat, E 302 Ascorbinsäureester, E 304 Tocopherol, E 306 Alpha-Tocopherol, E 307 Gamma-Tocopherol, E 308 Delta-Tocopherol, E 309 Propylgallat, E 310 Octygallat, E 311 Dodecylgallat, E 312 Isoascorbinsäure, E 315 Natriumisoascorbat, E 316 tertiär-Butylhydrochinon (TBHQ), E 319 Butylhydroxianisol, E 320 Butylhydroxitoluol, E 321 Lecithin, E 322 Citronensäure, E 330 Salze der Zitronensäure (E 331 & E 332) Natriumzitrat, E 331 Kaliumzitrat, E 332 Calcium-Dinatrium-EDTA, E 385 Diphosphate, E 450 Dinatriumdiphosphat, E 450a Trinatriumdiphosphat, E 450b Tetranatriumdiphosphat, E 450c Dikaliumdiphosphat, E 450d Trekaliumdiphosphat, E 450e Dikalziumdiphosphat, E 450f Kalziumdihydrogendiphosphst, E 450g Triphosphate, E 451 Pentanatriumtriphosphat, E 451a Pentakaliumtriphosphat, E 451b Polyphosphat, E 452 Natriumpolyphosphat, E 452a Kaliumpolyphosphat, E 452b Natriumkalziumpolyphosphat, E 452c Kalziumpolyphosphat, E 452d Zinn-II-Chlorid, E 512.

### Frucht- und Gemüsezubereitungen

Bei den Fruchtzubereitungen kann es sich beispielsweise um Marmelade, Fruchtaufstrich, Konfitüre oder Fruchtgelee, aber auch Fruchtpurees oder Fruchtsaftkonzentrate handeln. Unter Marmelade ist die traditionelle Bezeichnung für einen Brotaufstrich zu verstehen, der aus mit Zucker eingekochten Früchten hergestellt wird, ohne dass Fruchtstücke im Fertigprodukt sichtbar bleiben. Unter einer Konfitüre versteht man indes ein Produkt, in dem die Fruchtstückchen noch sichtbar sind. Fruchtgelees enthalten Pektin, das in vielen Früchten, besonders in Äpfeln, enthalten ist. Um es aus den Zellwänden zu lösen, werden pektinreiche Früchte mit Zucker gekocht. Der Zucker entzieht den Zellen Wasser, wobei ihre Wände zerstört und das Pektin leichter freigesetzt werden kann. Ist genug Zucker in der Lösung vorhanden, bindet das freiwerdende Wasser an den Zucker - die Pektinmoleküle können nur noch miteinander reagieren und nicht mehr mit dem Wasser. Damit sie sich beim Abkühlen zu einem Gerüst verbinden, in dem das Wasser "eingesperrt" wird, müssen sie allerdings in genügend hoher Konzentration vorliegen und die Lösung muss sauer sein, da die Pektinmoleküle sich sonst (durch Ionisierung) gegenseitig abstoßen. Der ideale pH-Wert liegt bei 3,3. Lebensmittelrechtlich werden Gelees aus wässrigen Auszügen von Früchten oder eingedicktem Fruchtsaft als *Gelee einfach* (Obstsaftanteil von mindestens 35 %) oder *Gelee ext*ra (Obstsaftanteil von mindestens 45 %) bezeichnet. Ein typisches Beispiel für eine Gemüsezubereitung ist Spinatpulver.

### Aromastoffe

Die Auswahl der Aromastoffe ist unkritisch und richtet sich allein nach der gewünschten Geschmacksrichtung. Bevorzugte Aromastoffe sind solche, die einen süßen Geruchseindruck verursachen, wobei der oder die weiteren Aromastoffe, die einen süßen Geruchseindruck verursachen, bevorzugt ausgewählt sind aus der Gruppe bestehend aus: Vanillin, Ethylvanillin, Ethylvanillinisobutyrat (= 3 Ethoxy-4-isobutyryloxybenzaldehyd), Vanilleextrakte, Furaneol (2,5-Dimethyl-4-hydroxy-3(2H)-furanon) und Abkömmlinge (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Abkömmlinge (z.B. Ethylmaltol), Cumarin und Abkömmlinge, gamma-Lactone (z.B. gamma-Undecalacton, gamma-Nonalacton), delta-Lactone (z.B. 4-Methyldeltalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al, 4-Hydroxyzimtsäure, 4-Methoxy-3-hydroxyzimtsäure, 3-Methoxy-4-hydroxyzimtsäure, 2-Hydroxyzimtsäure, 2,4-Dihydroxybenzoesäure, 3-Hydroxybenzoesäure, 3,4-Dihydroxybenzoesäure, Vanillinsäure, Homovanillinsäure, Vanillomandelsäure und Phenylacetaldehyd.

### Lebensmittelfarbstoffe

Lebensmittelfarbstoffe oder kurz Farbstoffe sind Lebensmittelzusatzstoffe zum Färben von Lebensmittel. Farbstoffe werden in die Gruppen der natürlichen Farbstoffe und synthetischen Farbstoffe unterteilt. Die naturidentischen Farbstoffe sind ebenfalls synthetischen Ursprungs. Die naturidentische Farbstoffe sind synthetische Nachbildungen von in der Natur vorkommenden, färbenden Substanzen. Geeignete Farbstoffe für den Einsatz in der vorliegenden Zusammensetzung sind ausgewählt aus: Kurkumin, E 100 Riboflavin, Lactoflavin, Laktoflavin, Vitamin B2, E 101 Tartrazin, E 102 Chinolingelb, E 104 Gelborange S, Gelborange RGL, E 110 Cochenille, Karminsäure, echtes Karmin, E 120 Azorubin, Carmoisin, E 122 Amaranth, E 123 Cochenillerot A, Ponceau 4 R, Victoriascharlach 4 R, E 124 Erythrosin, E 127 Allurarot AC, E 129 Patentblau V, E 131 Indigotin, Indigo-Karmin, E 132 Brillantblau FCF, Patentblau AE, Amidoblau AE, E 133 Chlorophylle, Chlorophylline, E 140 Kupferkomplexe der Chlorophylle, Kupfer-Chlorophyllin-Komple, E 141 Brillantsäuregrün, Grün S, E 142 Zuckerkulör, Zuckercouleur, E 150 a Sulfitlaugen-Zuckerkulör, E 150 b Ammoniak-Zuckerkulör, E 150 c Ammoniumsulfit-Zuckerkulör, E 150 d Brillantschwarz FCF, Brillantschwarz PN, Schwarz PN, E 151 Pflanzenkohle, E 153 Braun FK, E 154 Braun HT, E 155 Carotin, Karotin, E 160 a Annatto, Bixin, Norbixin, E 160 b Capsanthin, Capsorubin, E 160 c Lycopin, E 160 d Beta-apo-8'-Carotinal, Apocarotinal, Beta-Apocarotinal, E 160 e Beta-apo-8'-Carotinsäure-Ethylester (C30), Apocarotinester, Beta-Carotinsäureester, E 160 f Lutein, Xanthophyll, E 161 b Canthaxanthin, E 161 g Betanin, Betenrot, E 162 Anthocyane, E 163 Calciumcarbonat, E 170 Titandioxid, E 171 Eisenoxide, Eisenhydroxide, E 172 Aluminium, E 173 Silber, E 174 Gold, E 175 Litholrubin BK, Rubinpigment BK, E 180.

In der vorliegenden Erfindung werden Ausgangszubereitungen eingesetzt, die die folgende Zusammensetzung aufweisen können:
(i) 25 bis 60 Gew.-% und insbesondere 30 bis 50 Kohlenhydrate,
(ii) 5 bis 30 Gew.-% und insbesondere 10 bis 20 Gew.-% gehärtete oder teilgehärtete oder ungehärtete Pflanzenfette,
(iii) 25 bis 50 Gew.-% und insbesondere 30 bis 40 Gew.-% Milchprodukte,
(iv) 0,1 bis 10 Gew.-% und insbesondere 0,2 bis 1,0 Gew.-% Emulgatoren sowie gegebenenfalls
(v) 1 bis 10 Gew.-% und insbesondere 2 bis 4 Gew.-% Zusatzstoffe ausgewählt aus der Gruppe, die gebildet wird von Süßstoffen, Säureregulatoren, Verdickungsmitteln, Vitaminen, prebiotischen Stoffen, Antioxidantien, Fruchtzubereitungen, Nüssen, Schokoladen, Aromastoffen und Lebensmittelfarbstoffen sowie deren Gemischen,
mit der Maßgabe, dass sich die Mengenangaben gegebenenfalls mit Wasser zu 100 Gew.-% ergänzen.

### TEMPERATURBEHANDLUNG

Im ersten Schritt zur Herstellung der konfektionierten Pulver, werden die Ausgangsstoffe vermischt. Die Ausgangsmischung besteht zwingend aus den Bestandteilen (i) bis (iv) und kann auch noch weitere Bestandteile der Gruppe (v) aufweisen, sofern es nicht ratsam ist, diese an anderen Stellen des Verfahrens zuzusetzen, um eine unerwünschte Temperaturbelastung zu vermeiden. Das Vermischen erfolgt in Gegenwart einer Menge an Wasser, die ausreichend ist, um einen pumpfähigen Slurry zu erzeugen, ohne das Verfahren durch einen zu hohen Wassergehalt ohne Not energetisch zu belasten.

Nach dem Vermischen erfolgt eine erste Temperaturbehandlung, bei der es sich um eine klassische Pasteurisierung handelt, d.h. die Mischung wird auf 70 bis 100° C erhitzt, insbesondere 15 Sekunden auf mindestens 72 °C. Dieser Vorgang kann beispielsweise in einem klassischen Wärmemaustauscher, speziell einem Plattenwärmeaustauscher erfolgen.

### HOMOGENISIERUNG#

An die Temperaturbehandlung schließt sich die Homogenisierung an. Diese erfolgt in einem Hochdruckhomogenisator im Bereich von 30 bis 80 °C und einem Druck von 50 bis 150 bar. Falls gewünscht kann das homogenisierte Zwischenprodukt vor der Aufkonzentrierung einer zweiten Temperaturbehandlung unterworfen werden, bei dem man es wenige Sekunden auf wenigstens 100 °C erhitzt.

### AUFKONZENTRIERUNG

Es schließt sich die Konzentrierung des Produktes an, die in jeder Vorrichtung durchgeführt werden kann, die beheizbar ist, ein Rührwerk aufweist und eine Abzugsvorrichtung für Wasserdampf. Das Produkt wird dabei auf einen Feststoffgehalt von mindestens 70 Gew.-%, vorzugsweise mindestens 80 Gew.-% und insbesondere mindestens 90 Gew.-% eingestellt.

### KRISTALLISATION

Die Kristallisation kann typisch in einem Rührkessel aber auch beispielsweise in einem Kratzkühler oder vorzugsweise einem Vakuumkühler erfolgen. Das Konzentrat wird auf 20 bis 40 °C abgekühlt und langsam zum Kristallisieren gebracht, wobei es dann entweder als Feststoff ausgeschleust oder eben abgeschabt wird. Es kann von Vorteil sein, dem Konzentrat Impfkristalle, beispielsweise Lactose zuzusetzen. Ein besonderer Vorteil dieses Schrittes ist, dass die in den Milchprodukten vorhandene Lactose ebenfalls auskristallisiert, was die Lagerstabilität im Hinblick auf eine verminderte Hygroskopie erheblich verbessert. Hierdurch werden Kristalle mit einem Durchmesser von maximal 20 µm erzeugt, die keine sensorischen Fehler (Sandigkeit) hervorrufen.

Die Stoffe, die die Komponente (v) bilden können nach der Temperaturbehandlung, vorzugsweise aber nach der Kristallisation zugesetzt werden.

### VAKUUMBANDTROCKNUNG

Vakuumbandtrockner bestehen im Wesentlichen aus einem Gehäuse mit eingebauten, das Produkt befördernden Transportbändern, welche über Heizaggregate gezogen werden. Eine automatische Bandregulierung sorgt für einen präzisen Bandlauf. Die Bänder werden in einer oder mehreren Ebenen parallel gefahren und jedem der Bänder wird eine Dosierpumpe mit oszillierender Düse zugeordnet, die das Produkt erfindungsgemäß als Schaum aufträgt. Die Anmelderin hat gefunden, dass gerade diese Art der Dosierung dazu führt, dass schließlich Produkte erhalten werden, die gegenüber denen beispielsweise aus der Sprühtrocknung hinsichtlich der Partikelgrößenverteilung und damit Löslichkeit und Sensorik deutlich überlegen sind. Hinzu kommt die Siedepunktverschiebung im Vakuum, die dafür sorgt, dass die Verdampfungstemperatur sinkt und das Produkt schonender getrocknet werden kann. Das Prinzip ist dabei bereits seit Mitte der 50er Jahre des vergangenen Jahrhunderts bekannt (vgl. DE 948678 A, BAYER).

Die noch Wasser enthaltenden Kristallisationszwischenprodukte durchlaufen während des Trocknens eine hochviskose, vielfach auch klebrige Phase, wodurch sich durch Dampfblasenbildung im Produkt am Ende des Trockenverlaufes auf dem Band ein Trockenkuchen bildet. Während die Bänder zunächst über mehrere von einander unabhängig einstellbare Heizzonen laufen, stellt die letzte Zone eine Kühlzone dar, in der der Trockenkuchen bis zur Sprödbrüchigkeit abgekühlt, mit einer Guillotine abgebrochen und im Brecher oder Granulator zerkleinert wird.

Der Vakuumbandtrockner kann mit Dampf, Druckwasser oder Thermoöl geheizt werden, das Vakuum wird im Allgemeinen mit einer Kombination aus Dampfstrahlpumpe mit nachgeschaltetem Kondensator und Wasserringvakuumpumpe erzeugt. In den Heizzonen beträgt die Temperatur dabei 60 bis 140°C und insbesondere 70 bis 120°C, wobei der Druck bei 5 bis 40 mbar und insbesondere 10 bis 30 mbar liegt. Die Heizzonen sind wie schon erwähnt individuell steuerbar, so dass es möglich ist, ein beliebiges Temperaturprofil anzulegen. In der Kühlzone herrschen dann Temperaturen von 20 bis 30 °C. Grundsätzlich gilt, die Trocknung bei möglichst niedrigen Temperaturen durchzuführen, um die Entstehung von nicht löslichen Partikeln zu minimieren. Eine bauliche Alternative wäre beispielsweise auch ein Vakuumtrockenschrank.

Anschließend können die so erhaltenen Pulver auf die gewünschte Partikelgröße vermahlen und abgesackt werden.

### GEWERBLICHE ANWENDBARKEIT

Ein weiterer Gegenstand der Erfindung betrifft die Verwendung der pulverförmigen Nahrungsmittelzusammensetzung als Instantpulver zur Herstellung von Speiseeis.

### BEISPIELE

### BEISPIEL 1

Als Ausgangszubereitung wurde eine Zubereitung aus 1600 g Magermilch, 125g Pflanzenfett und 12 g Stabilisator/Emulgatormischung eingesetzt. Diese Mischung wurde bei 55 bis 60 °C und einen Druck von 100 bis 150 bar homogenisiert und anschließend bei 72 °C für 15 Sekunden pasteurisiert. Anschließend wurde der homogenen Masse Zucker und Glucose zugegeben. Es folgt eine zweite Erhitzung auf 100 °C. Das resultierende Produkt wurde dann in einem Konzentrator auf eine Trockenmasse von 80 Gew.-% eingedampft. Die kristallisierte Masse wurde mit 7 g Vanillearoma vermischt und dann auf einen Vakuumbandtrockner gegeben, auf dem sie bei 40 °C und 20 mbar schonend von Restwasser befreit wurde. Anschließend wurde das resultierende Pulver vermahlen und abgefüllt.

### VERGLEICHSBEISPIEL V1

Beispiel 1 wurde wiederholt, jedoch die Vakuumbandtrocknung gegen eine Sprühtrocknung bei 180 °C ersetzt.

### BEURTEILUNG DER PULVER

Die Löslichkeit der Pulvers in Wasser (g/Liter) sowie das optische Erscheinungsbild (1 = keine Verfärbungen, 2 = leichte Verfärbungen, 3 = verbrannte Partikel) und die sensorischen Eigenschaften (sandiger Geschmack: 3 = ausgeprägt, 2 = vorhanden, 1 = nicht festzustellen) wurden von einem Panel bestehend aus drei erfahrenen Testern beurteilt. Die Ergebnisse sind in **Tabelle 1** zusammengefasst. Sie zeigen, dass die nach dem erfindungsgemäßen Verfahren erhältlichen Produkte hinsichtlich Löslichkeit, Erscheinungsbild und Sensorik den Produkten des Stands der Technik deutlich überlegen sind.

**Tabelle 1**

| Löslichkeit und Sensorik | | |
|---|---|---|
| **Beispiele** | **Beispiel 1** | **Vergleichsbeispiel V1** |
| Zeit für die Auflösung von 180 g Produkt in 500 ml Wasser | 8 s | 25 s |
| Farbqualität | 1 | 3 |
| Sensorische Beurteilung | 1 | 3 |
| Löslichkeit in ml Sediment | < 0,1 | >5 * |

| | | |
|---|---|---|
| *) Produkt war durch überhitzten Zucker verklumpt | | |

## Patentansprüche

1. Pulverförmige Nahrungsmittelzusammensetzung, dadurch erhältlich, dass man eine Zubereitung enthaltend oder bestehend aus
(i) 25 bis 60 Gew.-% Kohlenhydraten, die ausgewählt sind aus der Gruppe, die gebildet wird von Glucose, Fructose, Dextrose, Dextrinen und deren Gemischen,
(ii) 5 bis 30 Gew.-% gehärtete oder teilgehärtete oder ungehärtete Pflanzenfette,
(iii) 25 bis 50 Gew.-% Milchprodukten,
(iv) 0,1 bis 10 Gew.-% Emulgatoren ausgewählt aus der Gruppe bestehend aus Vollei, Mono- und Diglyceriden von Speisefettsäuren und Eigelb sowie gegebenenfalls
v) 1 bis 10 Gew.-% Zusatzstoffen ausgewählt aus der Gruppe, die gebildet wird von
• Süßstoffen ausgewählt aus der Gruppe bestehend aus Zuckeralkohole, Miraculin, Monellin, Thaumatin, Curculin, Brazzein, Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin, Süß schmeckende Aminosäuren, Hernandulcin, Dihydrochalconglykoside, Glycyrrhizin, Glycerrhetinsäure, ihre Derivate und Salze, Extrakte von Lakritz, Lippia dulcis Extrakte, Momordica ssp. Extrakte, Momordica grosvenori [Luo Han Guo] und die daraus gewonnenen Mogroside, Hydrangea dulcis oder Stevia ssp. (z.B. Stevia rebaudiana) Extrakte,
• Säureregulatoren,
• Verdickungsmitteln ausgewählt aus der Gruppe bestehend aus, Alginsäure, Natriumalginat, Kaliumalginat, Ammoniumalginat, Calciumalginat, Propylenglycolalginat, Agar Agar, Carrgeen, Furcelleran, Johannisbrotkernmehl, Guarkernmehl, Traganth, Gummi arabicum, Xanthan, Karaya, Tarakernmehl, Gellan, Pektin, Opekta, Amidiertes Pektin, Mikrokristalline Cellulose, Cellulosepulver, Methylcellulose, Ethylcellulose, Hydroxypropylcellulose, Methylethylcellulose, Carboxymethylcellulose und Natriumcarboxymethylcellulose,
• Vitaminen,
• prebiotischen Stoffen,
• Antioxidantien,
• Fruchtzubereitungen,
• Nüssen,
• Schokoladen,
• Aromastoffen und
• Lebensmittelfarbstoffen
sowie deren Gemischen,
mit der Maßgabe, dass sich die Mengenangaben gegebenenfalls mit Wasser zu 100 Gew.-% ergänzen,
(a) zunächst einer Temperaturbehandlung unterwirft,
(b) das temperaturbehandelte Produkt homogenisiert,
(c) das homogenisierte Produkt aufkonzentriert
(d) das aufkonzentrierte Produkt zur Kristallisation bringt,
(e) und das kristallisierte Produkt auf einem Vakuumbandtrockner von restlichem Wasser befreit.

2. Verfahren zur Herstellung einer pulverförmigen Nahrungsmittelzusammensetzung, bei dem man eine Zubereitung enthaltend oder bestehend aus
(i) 25 bis 60 Gew.-% Kohlenhydraten, die ausgewählt sind aus der Gruppe, die gebildet wird von Glucose, Fructose, Dextrose, Dextrinen und deren Gemischen,
(ii) 5 bis 30 Gew.-% gehärtete oder teilgehärtete oder ungehärtete Pflanzenfette,
(iii) 25 bis 50 Gew.-% Milchprodukten,
(iv) 0,1 bis 10 Gew.-% Emulgatoren ausgewählt aus der Gruppe bestehend aus Vollei, Mono- und Diglyceriden von Speisefettsäuren und Eigelb sowie gegebenenfalls
v) 1 bis 10 Gew.-% Zusatzstoffen ausgewählt aus der Gruppe, die gebildet wird von
• Süßstoffen ausgewählt aus der Gruppe bestehend aus Zuckeralkohole, Miraculin, Monellin, Thaumatin, Curculin, Brazzein, Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin, Süß schmeckende Aminosäuren, Hernandulcin, Dihydrochalconglykoside, Glycyrrhizin, Glycerrhetinsäure, ihre Derivate und Salze, Extrakte von Lakritz, Lippia dulcis Extrakte, Momordica ssp. Extrakte, Momordica grosvenori [Luo Han Guo] und die daraus gewonnenen Mogroside, Hydrangea dulcis oder Stevia ssp. (z.B. Stevia rebaudiana) Extrakte,
• Säureregulatoren,
• Verdickungsmitteln ausgewählt aus der Gruppe bestehend aus, Alginsäure, Natriumalginat, Kaliumalginat, Ammoniumalginat, Calciumalginat, Propylenglycolalginat, Agar Agar, Carrgeen, Furcelleran, Johannisbrotkernmehl, Guarkernmehl, Traganth, Gummi arabicum, Xanthan, Karaya, Tarakernmehl, Gellan, Pektin, Opekta, Amidiertes Pektin, Mikrokristalline Cellulose, Cellulosepulver, Methylcellulose, Ethylcellulose, Hydroxypropylcellulose, Methylethylcellulose, Carboxymethylcellulose und Natriumcarboxymethylcellulose,
• Vitaminen,
• prebiotischen Stoffen,
• Antioxidantien,
• Fruchtzubereitungen,
• Nüssen,
• Schokoladen,
• Aromastoffen und
• Lebensmittelfarbstoffen
sowie deren Gemischen,
mit der Maßgabe, dass sich die Mengenangaben gegebenenfalls mit Wasser zu 100 Gew.-% ergänzen,
(a) zunächst einer Temperaturbehandlung unterwirft,
(b) das temperaturbehandelte Produkt bei Temperaturen im Bereich von 30 bis 80 °C und einem Druck von 50 bis 150 bar homogenisiert,
(c) das homogenisierte Produkt aufkonzentriert
(d) das aufkonzentrierte Produkt zur Kristallisation bringt,
(e) und das kristallisierte Produkt auf einem Vakuumbandtrockner von restlichem Wasser befreit.

3. Verfahren nach Anspruch 2, **dadurch gekennzeichnet, dass** man als Komponente (iii) Milchprodukte einsetzt, die ausgewählt sind aus der Gruppe, die gebildet wird von Magermilch, Vollmilch, teilentrahmte Milch, Sahne, Molke, Molkeproteinkonzentraten und deren Gemischen.

4. Verfahren nach mindestens einem der Ansprüche 2 bis 3, **dadurch gekennzeichnet, dass** die Temperaturbehandlung bei 70 bis 100 °C erfolgt

5. Verfahren nach mindestens einem der Ansprüche 2 bis 4, **dadurch gekennzeichnet, dass** das homogenisierte Zwischenprodukt vor der Aufkonzentrierung einer zweiten Temperaturbehandlung unterworfen wird.

6. Verfahren nach mindestens einem der Ansprüche 2 bis 5, **dadurch gekennzeichnet, dass** das Zwischenprodukt auf einen Feststoffgehalt von mindestens 70 Gew.-% aufkonzentriert wird.

7. Verfahren nach mindestens einem der Ansprüche 2 bis 6, **dadurch gekennzeichnet, dass** die Vakuumbandtrocknung bei einer Temperatur im Bereich von 60 bis 140 °C und einem verminderten Druck von 5 bis 40 mbar erfolgt.

8. Verfahren nach mindestens einem der Ansprüche 2 bis 7, **dadurch gekennzeichnet, dass** die Zugabe der Stoffe, die die Komponente (v) bilden, nach der Temperaturbehandlung und/oder nach der Kristallisation erfolgt.

9. Verwendung der pulverförmigen Nahrungsmittelzusammensetzung nach Anspruch 1 als Instantpulver zur Herstellung von Speiseeis.

## Claims

1. A food composition in powder form, obtained by subjecting a preparation comprising or consisting of
(i) 25 to 60 wt. % carbohydrates, wherein the carbohydrates are selected from the group consisting of glucose, fructose dextrose, dextrins and mixtures thereof,
(ii) 5 to 30 wt. % hydrogenated or partially hydrogenated or unhydrogenated vegetable fats,
(iii) 25 to 50 wt. % milk products,
(iv) 0.1 to about 10 wt. % emulsifiers, wherein the emulsifiers are selected from the group consisting of whole egg, mono- and diglycerides of edible fatty acids and egg yolk and optionally
(v) 1 to 10 wt. % of additives selected from the group consisting of
• sweeteners selected from the group consisting of sugar alcohols, miraculin, monellin, thaumatin, curculin, brazzein), magap, sodium cyclamate, acesulfame K, neohesperidin dihydrochalcone, saccharin sodium salt, aspartame, superaspartame, neotame, alitame, sucralose, steviosides, rebaudiosides, lugduname, carrelame, sucrononate, sucrooctate, monatin, phyllodulcin, sweet-tasting amino acids, hernandulcin, dihydrochalcone glycosides, glycyrrhizin, glycyrrhetic acid, derivatives and salts thereof, extracts of liquorice, Lippia dulcis extracts, Momordica ssp. Extracts, Momordica grosvenori [Luo Han Guo] and the mogrosides obtained therefrom, Hydrangea dulcis or Stevia ssp. (e.g. Stevia rebaudiana) extracts,
• acidity regulators,
• thickeners selected from the group consisting of alginic acid, sodium alginate, potassium alginate, ammonium alginate, calcium alginate, propylene glycol alginate, agar-agar, carrageenan, furcellaran, carob kernel flour, guar kernel flour, tragacanth, gum Arabic, xanthan, karaya, tara kernel flour, gellan, pectin, opecta, amidated pectin, microcrystalline cellulose, cellulose powder, methylcellulose, ethylcellulose, hydroxypropylcellulose, methylethylcellulose, carboxymethylcellulose and sodium carboxymethylcellulose,
• vitamins,
• prebiotic substances,
• antioxidants,
• fruit preparations,
• nuts,
• chocolates,
• flavourings and
• food colourings
and also mixtures thereof
with the proviso that the quantity figures add up, optionally with water, to 100 wt, % to a process comprising the steps of:
(a) firstly subjecting said preparation to a temperature treatment,
(b) homogenizing the temperature-treated product,
(c) concentrating the homogenized product,
(d) inducing to crystallize the concentrated product,
(e) and freeing the crystallized product from residual water by a vacuum belt dryer.

2. A process for producing a food composition in powder form, in which a preparation comprising or consisting of
(i) 25 to 60 wt. % carbohydrates, wherein the carbohydrates are selected from the group consisting of glucose, fructose dextrose, dextrins and mixtures thereof,
(ii) 5 to 30 wt. % hydrogenated or partially hydrogenated or unhydrogenated vegetable fats,
(iii) 25 to 50 wt. % milk products,
(iv) 0.1 to about 10 wt. % emulsifiers, wherein the emulsifiers are selected from the group consisting of whole egg, mono- and diglycerides of edible fatty acids and egg yolk and optionally
(v) 1 to 10 wt. % of additives selected from the group consisting of
• sweeteners selected from the group consisting of sugar alcohols, miraculin, monellin, thaumatin, curculin, brazzein), magap, sodium cyclamate, acesulfame K, neohesperidin dihydrochalcone, saccharin sodium salt, aspartame, superaspartame, neotame, alitame, sucralose, steviosides, rebaudiosides, lugduname, carrelame, sucrononate, sucrooctate, monatin, phyllodulcin, sweet-tasting amino acids, hernandulcin, dihydrochalcone glycosides, glycyrrhizin, glycyrrhetic acid, derivatives and salts thereof, extracts of liquorice, Lippia dulcis extracts, Momordica ssp. Extracts, Momordica grosvenori [Luo Han Guo] and the mogrosides obtained therefrom, Hydrangea dulcis or Stevia ssp. (e.g. Stevia rebaudiana) extracts,
• acidity regulators,
• thickeners selected from the group consisting of alginic acid, sodium alginate, potassium alginate, ammonium alginate, calcium alginate, propylene glycol alginate, agar-agar, carrageenan, furcellaran, carob kernel flour, guar kernel flour, tragacanth, gum Arabic, xanthan, karaya, tara kernel flour, gellan, pectin, opecta, amidated pectin, microcrystalline cellulose, cellulose powder, methylcellulose, ethylcellulose, hydroxypropylcellulose, methylethylcellulose, carboxymethylcellulose and sodium carboxymethylcellulose,
• vitamins,
• prebiotic substances,
• antioxidants,
• fruit preparations,
• nuts,
• chocolates,
• flavourings and
• food colourings
and also mixtures thereof
with the proviso that the quantity figures add up, optionally with water, to 100 wt, %, wherein
(a) said preparation is firstly subjected to a temperature treatment,
(b) the temperature-treated product is homogenized at temperatures in the range from 30 to 80 °C and at a pressure of 50 to 150 bar,
(c) the homogenized product is concentrated,
(d) the concentrated product is induced to crystallize,
(e) and the crystallized product is freed from residual water by a vacuum belt dryer.

3. Process according to claim 2, wherein milk products selected from the group consisting of skimmed milk, whole milk, semi-skimmed milk, cream, whey, whey protein concentrates and mixtures thereof are applied as component (iii).

4. Process according to at least one of claims 2 to 3, wherein the temperature treatment takes place at 70 to 100 °C.

5. Process according to at least one of claims 2 to 4, wherein the homogenized intermediate is subjected to a second temperature treatment prior to the concentration.

6. Process according to at least one of claims 2 to 5, wherein the intermediate is concentrated to a solids content of at least 70 wt. %.

7. Process according to at least one of claims 2 to 6, wherein the vacuum belt drying takes place at a temperature in the range from 60 to 140 °C and at a reduced pressure of 5 to 40 mbar.

8. Process according to at least one of claims 2 to 7, wherein the substances which form component (v) are added after the temperature treatment and/or after the crystallization.

9. Use of food composition in powder form according to claim 1 as an instant powder for producing ice-cream.

## Revendications

1. Composition alimentaire en poudre, pouvant être obtenue en ce qu'une préparation contenant ou constituée par :
(i) 25 à 60 % en poids de glucides, qui sont choisis dans le groupe formé par le glucose, le fructose, le dextrose, les dextrines et leurs mélanges,
(ii) 5 à 30 % en poids de matières grasses végétales durcies ou partiellement durcies ou non durcies,
(iii) 25 à 50 % en poids de produits laitiers,
(iv) 0,1 à 10 % en poids d'émulsifiants choisis dans le groupe constitué par l'oeuf entier, les mono- et diglycérides d'acides gras alimentaires et le jaune d'oeuf, ainsi qu'éventuellement
v) 1 à 10 % en poids d'additifs choisis dans le groupe qui est formé par
• les édulcorants choisis dans le groupe constitué par les alcools de sucre, la miraculine, la monelline, la thaumatine, la curculine, la brazzéine, le magap, le cyclamate de sodium, l'acésulfame K, la néohespéridine dihydrochalcone, le sel de sodium de saccharine, l'aspartame, le superaspartame, le néotame, l'alitame, le sucralose, le stévioside, le rébaudioside, le lugduname, le carrélame, le sucrononate, le sucrooctate, la monatine, la phénylodulcine, les acides aminés à goût sucré, l'hernandulcine, les dihydrochalcone-glycosides, la glycyrrhizine, l'acide glycérrhétique, ses dérivés et sels, les extraits de réglisse, les extraits de Lippia dulcis, les extraits de Momordica ssp., Momordica grosvenori [Luo Han Guo] et les mogrosides obtenus à partir de celui-ci, les extraits de Hydrangea dulcis ou Stevia ssp. (p. ex. Stevia rebaudiana),
• les régulateurs d'acidité,
• les épaississants choisis dans le groupe constitué par l'acide alginique, l'alginate de sodium, l'alginate de potassium, l'alginate d'ammonium, l'alginate de calcium, l'alginate de propylène glycol, l'agar agar, le carraghénane, le furcellerane, la gomme de caroube, la gomme de guar, la gomme adragante, la gomme arabique, le xanthane, le karaya, la gomme de tara, le gellane, la pectine, l'opekta, la pectine amidée, la cellulose microcristalline, la poudre de cellulose, la méthylcellulose, l'éthylcellulose, l'hydroxypropylcellulose, la méthyléthylcellulose, la carboxyméthylcellulose et la carboxyméthylcellulose de sodium,
• les vitamines,
• les substances prébiotiques,
• les antioxydants,
• les préparations à base de fruits,
• les noix,
• le chocolat,
• les arômes et
• les colorants alimentaires,
ainsi que leurs mélanges,
à condition que la somme des indications de quantité, éventuellement avec de l'eau, soit de 100 % en poids,
(a) est tout d'abord soumise à un traitement thermique,
(b) le produit traité thermiquement est homogénéisé,
(c) le produit homogénéisé est concentré,
(d) le produit concentré est amené à cristalliser,
(e) et le produit cristallisé est débarrassé de l'eau résiduelle sur un séchoir à bande sous vide.

2. Procédé de fabrication d'une composition alimentaire en poudre, selon lequel une préparation contenant ou constituée par :
(i) 25 à 60 % en poids de glucides, qui sont choisis dans le groupe formé par le glucose, le fructose, le dextrose, les dextrines et leurs mélanges,
(ii) 5 à 30 % en poids de matières grasses végétales durcies ou partiellement durcies ou non durcies,
(iii) 25 à 50 % en poids de produits laitiers,
(iv) 0,1 à 10 % en poids d'émulsifiants choisis dans le groupe constitué par l'oeuf entier, les mono- et diglycérides d'acides gras alimentaires et le jaune d'oeuf, ainsi qu'éventuellement
v) 1 à 10 % en poids d'additifs choisis dans le groupe qui est formé par
• les édulcorants choisis dans le groupe constitué par les alcools de sucre, la miraculine, la monelline, la thaumatine, la curculine, la brazzéine, le magap, le cyclamate de sodium, l'acésulfame K, la néohespéridine dihydrochalcone, le sel de sodium de saccharine, l'aspartame, le superaspartame, le néotame, l'alitame, le sucralose, le stévioside, le rébaudioside, le lugduname, le carrélame, le sucrononate, le sucrooctate, la monatine, la phénylodulcine, les acides aminés à goût sucré, l'hernandulcine, les dihydrochalcone-glycosides, la glycyrrhizine, l'acide glycérrhétique, ses dérivés et sels, les extraits de réglisse, les extraits de Lippia dulcis, les extraits de Momordica ssp., Momordica grosvenori [Luo Han Guo] et les mogrosides obtenus à partir de celui-ci, les extraits de Hydrangea dulcis ou Stevia ssp. (p. ex. Stevia rebaudiana),
• les régulateurs d'acidité,
• les épaississants choisis dans le groupe constitué par l'acide alginique, l'alginate de sodium, l'alginate de potassium, l'alginate d'ammonium, l'alginate de calcium, l'alginate de propylène glycol, l'agar agar, le carraghénane, le furcellerane, la gomme de caroube, la gomme de guar, la gomme adragante, la gomme arabique, le xanthane, le karaya, la gomme de tara, le gellane, la pectine, l'opekta, la pectine amidée, la cellulose microcristalline, la poudre de cellulose, la méthylcellulose, l'éthylcellulose, l'hydroxypropylcellulose, la méthyléthylcellulose, la carboxyméthylcellulose et la carboxyméthylcellulose de sodium,
• les vitamines,
• les substances prébiotiques,
• les antioxydants,
• les préparations à base de fruits,
• les noix,
• le chocolat,
• les arômes et
• les colorants alimentaires,
ainsi que leurs mélanges,
à condition que la somme des indications de quantité, éventuellement avec de l'eau, soit de 100 % en poids,
(a) est tout d'abord soumise à un traitement thermique,
(b) le produit traité thermiquement est homogénéisé à des températures dans la plage allant de 30 à 80 °C et à une pression de 50 à 150 bar,
(c) le produit homogénéisé est concentré,
(d) le produit concentré est amené à cristalliser,
(e) et le produit cristallisé est débarrassé de l'eau résiduelle sur un séchoir à bande sous vide.

3. Procédé selon la revendication 2, **caractérisé en ce que** des produits laitiers qui sont choisis dans le groupe formé par le lait écrémé, le lait entier, le lait demi-écrémé, la crème, le lactosérum, les concentrés de protéine de lactosérum et leurs mélanges sont utilisés en tant que composant (iii).

4. Procédé selon au moins l'une quelconque des revendications 2 à 3, **caractérisé en ce que** le traitement thermique a lieu à des températures de 70 à 100 °C.

5. Procédé selon au moins l'une quelconque des revendications 2 à 4, **caractérisé en ce que** le produit intermédiaire homogénéisé est soumis à un deuxième traitement thermique avant la concentration.

6. Procédé selon au moins l'une quelconque des revendications 2 à 5, **caractérisé en ce que** le produit intermédiaire est concentré à une teneur en solides d'au moins 70 % en poids.

7. Procédé selon au moins l'une quelconque des revendications 2 à 6, **caractérisé en ce que** le séchage sur bande sous vide a lieu à une température dans la plage allant de 60 à 140 °C et à une pression réduite de 5 à 40 mbar.

8. Procédé selon au moins l'une quelconque des revendications 2 à 7, **caractérisé en ce que** l'ajout des substances qui forment le composant (v) a lieu après le traitement thermique et/ou après la cristallisation.

9. Utilisation de la composition alimentaire en poudre selon la revendication 1 en tant que poudre instantanée pour la fabrication de crème glacée.
